# EUROPEAN PATENT APPLICATION

(11) **EP 4 670 861 A1**
(43) Date of publication of application: **31.12.2025**
(21) Application number: 24184665.8
(22) Date of filing: 26.06.2024
(51) Int. Cl.: B09B 3/80, B03B 9/06, B09B 5/00, B29B 17/02, B09B 101/35

(54) **METHOD FOR RECYCLING OF MINERAL FIBRE MATERIAL**

(71) Applicant: Saint-Gobain Ecophon AB, 265 03 Hyllinge (SE)
(72) Inventor: HERLUISON, Anaîs, 84306 Cavaillon (FR); OLIVET, Lilian, 84306 Cavaillon (FR); NONNET, Emmanuel, 84306 Cavaillon (FR); PONS, Adeline, 84306 Cavaillon (FR); BORGSTRÖM, Johan, 224 67 Lund (SE); KARLSSON, Ola, 222 41 Lund (SE); HOOSHMAND, Saleh, 254 73 Ödåkra (SE); TROPHARDY, Coline, 01200 Injoux-Genissiat (FR)
(74) Representative: AWA Sweden AB

(57) **Abstract**

The present invention relates to a method for recycling of elements (1) comprising a mineral fibre material bonded by a binder agent. The method comprises: fragmenting the elements (1) for provision of a powder component (3); dispersing at least a portion of the powder component (3) in an aqueous solution (6); extraction of a first fraction (9) from the at least a portion of the powder component (3) in the aqueous solution (6); and extraction of a second fraction (10) from the at least a portion of the powder component (3) in the aqueous solution (6) for obtaining a cleaned powder component; wherein the wt%, by dry weight, of binder agent in the first fraction (9) is higher than the wt%, by dry weight, of binder agent in the second fraction (10).

## Description

### Field of the invention

The present invention relates to methods of recycling of elements comprising a mineral fibre material bonded by a binder agent, and systems provided therefor.

### Background art

Mineral fibre waste material from production spill is a type of waste material that often cannot be efficiently recycled.

Instead, this fraction of waste material often goes to landfill and thus drives cost. Further, some mineral fibre is manufactured using a phenolic binder, and thus, when the waste material is deposited in landfills, there is a risk of leaching water from the landfills being contaminated.

Therefore, it has been proposed that the mineral waste material may be recycled by milling in order to provide a mineral fibre material. The recycled, milled mineral fibre material may for instance be used as a filler material for mixing with concrete of alkali-activated materials. Alternatively, the milled fibre material may be used as an additive in paint.

However, if the mineral wool waste material containing a phenolic binder is used as a filler material for mixing with concrete or alkali-activated materials, there is a risk that the combined material will release harmful gases, for example ammonia. Further, there is also a risk that the binder releases colored substances. Thus, such recycled mineral fibre material may be unsuitable for use as an additive in paint, of for applications where the end product is visible.

Also, it has proven commercially difficult to reliably achieve a sufficiently small particle size of the milled mineral fibre material. It is not enough to provide a small enough average particle size, but rather necessary to avoid contamination by lager particles. Large particles in the milled mineral fibre material may block pumps and filters during use, and may also cause unwanted defects or affect the quality, for example if the milled mineral fibre material is used as an additive in paint where the rheology must be possible to control from batch to batch.

Thus, there is a need for an improved method of recycling mineral fibre material, especially such material containing phenolic binders.

### Summary of the invention

To achieve at least one of the above objects and also other objects that will be evident from the following description, a method having the features defined in claim 1 is provided according to the present invention. Preferred embodiments will be evident from the dependent claims.

According to a first aspect, a method for recycling of elements comprising a mineral fibre material bonded by a binder agent is provided, the method comprising: fragmenting the elements for provision of a powder component; dispersing at least a portion of the powder component in an aqueous solution; extraction of a first fraction from the at least a portion of the powder component in the aqueous solution; and extraction of a second fraction from the at least a portion of the powder component in the aqueous solution for obtaining a cleaned powder component; wherein the wt%, by dry weight, of binder agent in the first fraction is higher than the wt%, by dry weight, of binder agent in the second fraction.

Thus, mineral fibre material is cleaned in two steps. Firstly, binder agent material is removed through extraction of the first fraction, the first fraction comprising a higher wt% of binder agent compared to the second fraction. Secondly, by dispersing the powder component in an aqueous solution, unwanted compounds, such as additives or colourants, are released from the binder agent material and/or mineral fibre material. Hereby, an efficient method of removing at least a portion of binder agent material from is provided, thereby providing cleaner recycled material.

Dry weight of a fraction is to be understood as the weight of the fraction when no aqueous solution is present, i.e. the total weight of solid dispersion of such fraction. The first fraction may have 10 wt%, or 15 wt%, or 20 wt%, by dry weight, of binder agent, whereas the second fraction has 15 wt%, or 10 wt%, or 5 wt%, by dry weight, of binder agent.

Within the context of the present disclosure, *"Fragmenting"* is to be understood as a process of breaking an element into fragments. Hence, fragmenting may consist of or comprise any one or a combination of cutting, shredding, grinding, crushing and milling. Hence, fragmenting elements may, e.g., be performed by by means of a shredder, a ball mill, rod mill, hammer mill, screw mill, granulator, pin mill, or cutter.

An element comprising a mineral fibre material may e.g. be an acoustic panel, e.g. an acoustic panel for a suspended ceiling. For example, an element comprising mineral fibre material may be a panel having a substantially rectangular shape and comprising a first and a second main surfaces, and four side edges. However, it is to be understood that mineral fibre material does not have to be provided in the form of discrete units having a distinct shape. Alternatively, mineral fibre material may be provided in the form of a web of loose mineral fibre.

Examples of mineral fibre material includes mineral wool, such as glass wool.

Examples of binder agent include phenolic binder agents, biobased binder agents, self crosslinking latex binders and polymeric bi-component fibers.

Since elements comprising mineral fibre material may differ from one another in terms of composition depending on a multitude of factors, such as field of application of the element, the relative amount of binder agent may also vary. An element may comprise 5 to 30 wt%, or 5 to 20 wt%, or 5 to 10 wt% binder agent.

The binder agent may e.g. be a phenolic binder agent. That is, the binder agent may comprise phenolic compounds. Since phenolic compounds are partially soluble in aqueous media, at least a portion of phenolic compounds may be removed from binder agent when dispersed in the aqueous media.

An aqueous solution may be any solution comprising liquid water. For example, the aqueous solution may comprise at least 50% liquid water, or at least 75% liquid water, or at least 95% liquid water.

The aqueous solution may further comprise a solvent or an additive that enhances soluability of binder agent in aqueous media. Examples include watermiscible organic solvents, such as polyols, esters and ethers, or acids, such as organic acids, like acetic acid or hexanoic acid, or inorganic acids, like HCl, H₃PO₄, HF, etc, or alkaline compounds, for example organic compounds, such as amines, amides, guanidine, imidazole or neutralized quarternary ammonium cations, or ionorganic compounds, such as NaOH, Ca(OH)₂, or KOH.

Fragmenting the mineral fibre material results in at least some of the binder agent being detached from the mineral fibres. That is, particles of binder agent material will be present in the powder component.

The elements may be fragmented to mineral fibre fragments of any desired dimensions. That is, the powder component may comprise mineral fibre fragments of any desired dimensions. For example, fragmenting the elements may be performed for provision of a powder component with mineral fibre fragments having an average fibre length in the range of 20 - 500 µm, for example 30 - 460 µm, or 50 - 440 µm, or 100 - 400 µm, or 150 - 350 µm, or 200 - 300 µm. Additionally or alternatively, fragmenting the elements may be performed for provision of a powder component with mineral fibre fragments having an average fibre width in the range of 5 - 25 µm, or5 - 10 µm.

The powder component may be subjected to one or more size separation steps The at least a portion of the powder component may be obtained by a size separation step in which mineral fibre fragments having a fibre length of 150 µm or less is separated from the powder component, and optionally wherein at least a portion of the remainder of the powder component is recirculated for fragmenting together with a new batch of elements comprising mineral fibre material bonded by a binder agent.

The size separation step is therefore performed before dispersing at least a portion of the powder component in an aqueous solution. Hereby, the at least a portion of the powder component which is subsequently dispersed in the aqueous solution mainly comprises mineral fibre fragments having a fibre length of 150 µm or less. The remainder of the powder component may be subjected to further fragmenting. The size separation step may e.g. be carried out in a dry sieving process.

The method may further comprise electrostatic separation of binder agent from the powder component.

Hence, the amount of binder agent in the powder component may be reduced before dispersion of at least a portion of the powder component in the aqueous solution. Electrostatic separation is performed by at least one electrostatic separator. An electrostatic separator may be a roll separator or a plate and screen separator.

The at least a portion of the powder component that is dispersed in the aqueous solution may e.g. be 10% of the powder component, or 20% of the powder component, or 30% of the powder component, or 40% of the powder component, or 50% of the powder component, or 60% of the powder component, or 70% of the powder component, 80% of the powder component, 90% of the powder component, or 100% of the powder component. The residual powder component may be recirculated for fragmenting together with a new batch of recycled elements.

The method may further comprise sonication of the at least a portion of the powder component in the aqueous solution.

Hereby, further separation of binder agent from the mineral fibre material is facilitated. Sonication is preferably performed using ultrasound frequencies, i.e. frequencies above 20 kHz. That is, sonication is preferably ultrasonication.

The method may further comprising heating of the at least a portion of the powder component in the aqueous solution.

Hereby, further separation of binder agent from the mineral fibre material is facilitated. This is achieved both due to breakdown of the materials due to the increased temperature, and the increased mixing due to increased convection.

The first and the second fraction may be extracted in a variety of ways. The first fraction may be extracted in the same way as the second fraction. Alternatively, the first fraction may be extracted in a way different to the second fraction. Further, the fractions may be extracted simultaneously, i.e. extraction of the first fraction may occur during extraction of the second fraction. Alternatively, the extraction of the first fraction may be separated in time from the separation of the second fraction, i.e. the second fraction may be extracted after completion of the extraction of the first fraction, or vice versa. Extraction of the second fraction may be a consequence of extraction of the first fraction, i.e. the second fraction may be constituted by the remainder of the dispersion after extraction of the first fraction.

Extraction of the first fraction may be performed by flotation.

This is particularly efficient for removal of particles of binder agent material of low weight and density.

Alternatively, extraction may be performed using a supercritical fluid. That is, the aqueous solution may be provided as a supercritical fluid. The supercritical fluid may be solely constituted by water. The supercritical aqueous solution may have a temperature of at least 373 C° and a pressure of at least 220 bars.

Extraction of the first fraction and/or the second fraction may be carried out in a filtration process or a gravitational assisted separation process.

Alternatively, extraction of the first fraction may be performed by flotation whereas extraction of the second fraction may be carried out in a filtration process or a gravitational assisted separation process.

Examples of gravitational assisted separation processes include sedimentation and field flow fractionation. Sedimentation may be performed with or without mixing. Dispersing the at least a portion of the powder component in an aqueous solution may be performed directly in a sedimentation tank.

Alternatively, the gravitational assisted separation process may comprise conducting a laminar flow of the aqueous solution and said at least a portion of the powder component dispersed therein in a channel towards a channel outlet section provided with a top outlet and a bottom outlet, wherein a first flow of the aqueous solution and said at least a portion of the powder component dispersed therein exits the channel via the top outlet and a second flow of the aqueous solution and said at least a portion of the powder component dispersed therein exits the channel via the bottom outlet, and wherein the first fraction is extracted from the first flow and the second fraction is extracted from the second flow for obtaining said cleaned powder component.

The dry weight of the second fraction may be predominantly constituted by mineral fibre fragments having a fibre length corresponding to a threshold value or less.

That is, at least 50% of the dry weight of the second fraction is constituted by mineral fibre material having a fibre length corresponding to a threshold value or less. However, preferably at least 70%, more preferably at least 80%, most preferably at least 90% of the second fraction is constituted by mineral fibre material having a fibre length corresponding to a threshold value or less. Hereby, the cleaned powder component predominantly comprises mineral fibre fragments having a desired fibre length or smaller. Thus, a cleaned product having desired material properties may be provided. This may be relevant if a specific use for the cleaned powder component is intended, for example as a filler material.

The threshold value may be 100 µm, more preferably 80 µm and most preferably 60 µm.

The method may further comprise extraction of a third fraction, the dry weight of the third fraction being predominantly constituted by mineral fibre fragments having a fibre length above the threshold value, said third fraction being recirculated for fragmenting together with a new batch of recycled elements comprising mineral fibre material bonded by a binder agent.

That is, the dry weight of the third fraction may predominantly be constituted by mineral fibre fragments having a fibre length above 100 µm, more preferably 80 µm and most preferably 60 µm.

Hereby, mineral fibre fragments that are too large for the intended purpose of the cleaned powder component are recirculated for further fragmenting, and a more material efficient method is provided.

The method may further comprise drying the cleaned powder component.

By drying the cleaned powder component, further volatile components of the binder agent material may be removed through evaporation.

Drying the cleaned powder component may be performed at an elevated temperature of at least 50°C. Alternatively, the elevated temperature may be in the range of 60-100°C.

Drying the cleaned powder component may e.g. be performed by an oven. Thus, drying the cleaned powder component may comprise heating the cleaned powder component. Heating the cleaned powder component may include conduction heating, additionally or alternatively convection heating, additionally or alternatively IR-heating.

The cleaned and dried powder component may further be subjected to crushing.

The cleaned powder component may be mixed with an alkali activator, wherein the alkali activator is selected from the group consisting of NaOH, K-Silicate, K₂CO₃, Na-Aluminate, KOH, LiOH, Na-Silicate and CA(OH)₂.

Hereby, a geopolymer material comprising the cleaned powder component may be provided with a reduced risk for the release harmful gases, for example ammonia.

Wastewater of the process may, after extraction of the first fraction and the second fraction, be recirculated and be used as at least a portion of aqueous solution for dispersion of a new batch of powder component. Recirculation of wastewater may include filtration and/or chemical processing and/or microbiological processing of the wastewater.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:

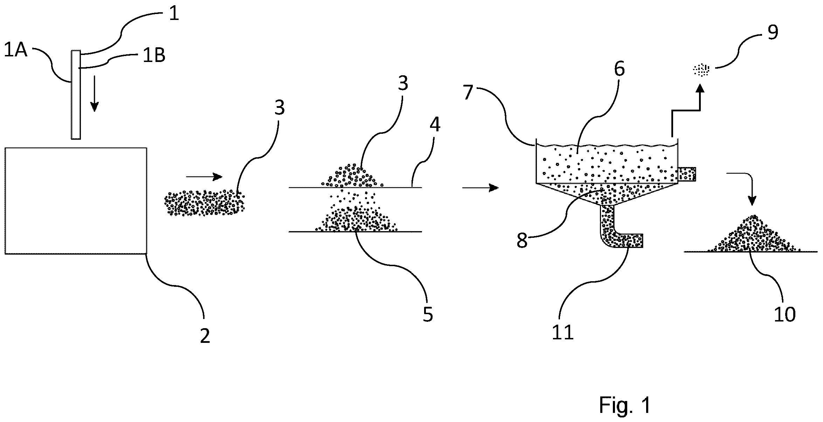

Fig. 1 is a schematic illustration of a method wherein elements comprising a mineral fibre material bonded by a binder agent are fragmented for provision of a powder component, wherein at least a portion of the powder component is extracted as a cleaned powder component by a gravitational assisted separating process, which in Fig. 1 is a sedimentation tank;

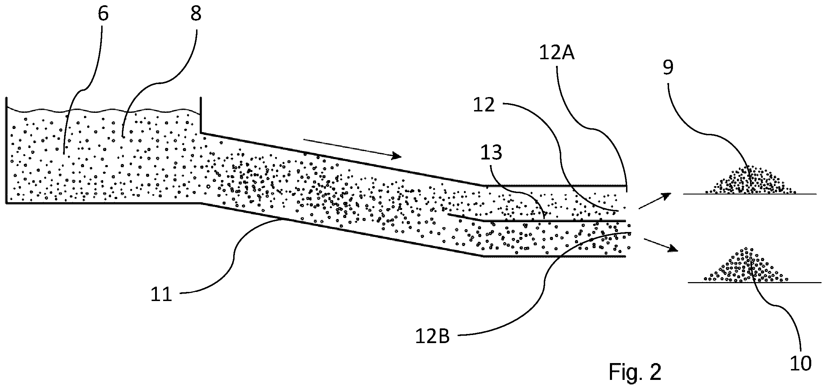

Fig. 2 is a schematic illustration of an alternative gravitational assisted separating process comprising conducting a laminar flow of aqueous solution with at least a portion of the powder component dispersed therein in a channel towards a channel outlet section provided with a top outlet and a bottom outlet.

### Description of embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

Fig. 1 illustrates a method for recycling of elements according to the first aspect of the present invention. An element 1 is provided to a fragmenting unit 2. The element 1 comprises a mineral fibre material bonded by a binder agent. The element 1 may e.g. be an acoustic panel for a suspended ceiling or heat insulation material. Here, the element 1 is panel having a substantially rectangular shape and comprising a first and a second main surface 1A, 1B, and four side edges.

Examples of mineral fibre material includes mineral wool, such as glass wool. Examples of binder agent include phenolic binder agents, biobased binder agents, self crosslinking latex binders and polymeric bi-component fibers.

Thus, The mineral fibre material of the element 1 may e.g. be mineral wool and the binder agent may e.g. be a phenolic binder agent.

Fragmenting of the element 1 may be performed in a variety of way. To this end, the fragmenting unit 2 may, for example, be a shredder, a ball mill, rod mill, hammer mill or screw mill. Here, one fragmenting unit 2 is shown. However, the method may alternatively be performed by one or more fragmenting units 2. For example, the element 1 may be subjected to a first and a second fragmenting, wherein the first fragmenting is performed by a first fragmenting unit 2 and the second fragmenting is performed by a second fragmenting unit 2. A first and second fragmenting units 2 may be of the same type, i.e. both may be a ball mill, or a hammer mill, or a screw mill. Alternatively, a first and second fragmenting unit 2 may be of different types. For example, a first fragmenting unit 2 may be a ball mill, whereas a second fragmenting unit 2 may be a screw mill. As another example, a first fragmenting unit may be a shredder, whereas a second fragmenting unit 2 is a ball mill, rod mill, hammer mill or screw mill.

Elements 1 may be provided to the fragmenting unit 2 in a discontinuous or a continuous process, e.g. depending on the type of fragmenting unit 2. As such, elements 1 may for example be provided continuously by a conveying means, such as a conveyor belt. Alternatively, elements 1 may be provided to the fragmenting unit 2 manually.

The element 1 is fragmented for provision of a powder component 3. The powder component comprises mineral fibre fragments. The powder component 3 may have an average fibre length in the range of 20 - 500 µm, for example 30 - 460 µm, or 50 - 440 µm, or 100 - 400 µm, or 150 - 350 µm, or 200 - 300 µm. Additionally or alternatively, the powder component 3 may comprise mineral fibre fragments having an average fibre width in the range of 5 - 25 µm and more preferably 5 - 10 µm.

The powder component 3 may be subjected to one or more optional size separation steps. In Fig. 1, the powder component 3 is sieved by a sieve 4 such that a fraction of sieved powder component 5 is obtained. The powder component may e.g. be separated such that mineral fibre fragments having a fibre length of 150 µm or less, or 100 µm or less, or 60 µm or less, or 30 µm or less, is separated from the powder component. As such, the fraction of sieved powder component 5 may mainly comprise mineral fibre fragments having a fibre length of 150 µm or less, or only comprise mineral fibre fragments having a fibre length of 150 µm or less. The remaining fraction of the powder component 3 after the fraction of sieved powder component 5 is separated therefrom may e.g. be returned to the fragmenting unit 2, or withdrawn from the process to be used in a further process or industrial application.

Additionally or alternatively binder agent may be electrostatically separated from the powder component. Electrostatic separation may performed by at least one electrostatic separator (not shown). An electrostatic separator may be a roll separator or a plate and screen separator.

At least a portion of the fraction of sieved powder component 5 is subsequently dispersed in an aqueous solution 6. However, it is to be understood that size separation by e.g. sieving is optional. Therefore, at least a portion of the powder component 3 may be dispersed in the aqueous solution 6. Alternatively, a combination of at least a portion of the powder component 3 and at least a portion of the sieved powder component 5 may be dispersed in the aqueous solution 6. The at least a portion of the powder component that is dispersed in the aqueous solution may e.g. be 10% of the powder component, or 20% of the powder component, or 30% of the powder component, or 40% of the powder component, or 50% of the powder component, or 60% of the powder component, or 70% of the powder component, 80% of the powder component, 90% of the powder component, or 100% of the powder component. The residual powder component may be recirculated for fragmenting together with a new batch of recycled elements.

In Fig. 1, the at least a portion of the powder component 3 or at least a portion of the sieved powder component 5 or the combination thereof is dispersed in an aqueous solution 6 in a sedimentation tank 7. An aqueous solution 6 may be any solution comprising liquid water. For example, the aqueous solution may comprise at least 50% liquid water, or at least 75% liquid water, or at least 95% liquid water. The aqueous solution may further comprise watermiscible organic solvents, such as polyols, esters and ethers, or acids, such as organic acids, like acetic acid or hexanoic acid, or inorganic acids, like HCl, H₃PO₄, HF, etc, or alkaline compounds, for example organic compounds, such as amines, amides, guanidine, imidazole or neutralized quarternary ammonium cations, or ionorganic compounds, such as NaOH, Ca(OH)₂, or KOH.

The method may further comprise sonication of the at least a portion of the powder component in the aqueous solution using sonication means (not shown). Sonication is preferably performed using ultrasound frequencies, i.e. frequencies above 20 kHz. That is, sonication is preferably ultrasonication. The method may further comprising heating by means of a heater (not shown) of the at least a portion of the powder component in the aqueous solution.

A first and a second fraction 9, 10 from the at least a portion of the powder component 3 are extracted. The fractions may be extracted in a variety of ways. The first fraction 9 may be extracted in the same way as the second fraction 10. Alternatively, the first fraction 9 may be extracted in a way different to the second fraction 19. Further, the fractions 9, 10 may be extracted simultaneously, i.e. extraction of the first fraction 9 may occur during extraction of the second fraction 10. Alternatively, the extraction of the first fraction 9 may be separated in time from the separation of the second fraction 10, i.e. the second fraction may be extracted after completion of the extraction of the first fraction, or vice versa. Extraction of the second fraction 10 may be a consequence of extraction of the first fraction 9, i.e. the second fraction 10 may, e.g., be constituted by the remainder of the dispersion after extraction of the first fraction 9.

In Fig 1., extraction of the first fraction 9 is performed by flotation. This is particularly efficient for removal of particles of binder agent material of low weight and density. The dispersed powder component 8 is subsequently size separated in accordance with established sedimentation principles. Subsequently, at least a portion of the dispersed powder component 8 is extracted from the aqueous solution 6 for obtaining a cleaned powder component. To this end, extraction of the at least a portion of the dispersed powder component 8 from the aqueous solution 6 comprises extraction of a second fraction 10, the second fraction forming the cleaned powder component. The dry weight of the second fraction may predominantly be constituted by mineral fibre fragments having a fibre length corresponding to a threshold value or less. The threshold value may be 100 µm, more preferably 80 µm and most preferably 60 µm. Furthermore, extraction of the at least a portion of the dispersed powder component 8 from the aqueous solution 6 may comprise extraction of a third fraction 11 with a dry weight predominantly constituted by mineral fibre fragments having a fibre length above the threshold value. The third fraction 11 may e.g. be recirculated to the fragmenting unit 2 for fragmenting together with a new batch of recycled elements 1 comprising mineral fibre material bonded by a binder agent.

Extraction may alternatively be performed using a supercritical fluid. That is, the aqueous solution may be provided as a supercritical fluid. The supercritical fluid may be solely constituted by water. The supercritical aqueous solution may have a temperature of at least 373 C° and a pressure of at least 220 bars.

An alternative gravitational assisted separating process is illustrated in Fig. 2. Here, the dispersed powder component 8 is separated by conducting a laminar flow of the aqueous solution 6 and the at least a portion of the powder component dispersed therein 8 in a channel 11. The aqueous solution 6 flows towards a channel outlet section 12 provided with a top outlet 12A and a bottom outlet 12B. The top outlet 12A and the bottom outlet 12B are separated by a wall 13. Here, a first flow of the aqueous solution 6 and the at least a portion of the powder component dispersed therein 8 exits the channel via the top outlet 12A and a second flow of the aqueous solution 6 and the at least a portion of the powder component dispersed therein 8 exits the channel via the bottom outlet 12B. Here, the first fraction of the dispersed powder component 8 is extracted from the first flow. The second fraction 10 is extracted from the second flow. The process may further comprise separation of a third fraction, wherein the third fraction is recirculated to the fragmenting unit 2 for fragmenting together with a new batch of recycled elements 1 comprising mineral fibre material bonded by a binder agent.

Regardless of the method of obtaining the cleaned powder component, the method may further comprise drying the cleaned powder component. Drying the cleaned powder component may e.g. be performed by an oven. Thus, drying the cleaned powder component may comprise heating the cleaned powder component. Drying the cleaned powder component may be performed at an elevated temperature of at least 50°C. Alternatively, the elevated temperature may be in the range of 60-100°C. Drying the cleaned powder component may thus include heating the cleaned powder component through conduction, additionally or alternatively convection, additionally or alternatively IR-heating.

Furthermore, the cleaned powder component, or the dried cleaned powder component, may be mixed with a cementitious material comprising an alkali activator, wherein the alkali activator is selected from the group consisting of NaOH, K-Silicate, K₂CO₃, Na-Aluminate, KOH, LiOH, Na-Silicate and CA(OH)₂. Hereby, an alkali activated material is provided. Furthermore, such material may be provided with a ballast material, such as gravel. Hereby, a concrete may be provided.

It will be appreciated that the present invention is not limited to the embodiments shown. Several modifications and variations are thus conceivable within the scope of the invention which thus is exclusively defined by the appended claims.

## Claims

1. A method for recycling of elements (1) comprising a mineral fibre material bonded by a binder agent, the method comprising:
fragmenting the elements (1) for provision of a powder component (3);
dispersing at least a portion of the powder component (3) in an aqueous solution (6);
extraction of a first fraction (9) from the at least a portion of the powder component (3) in the aqueous solution (6); and
extraction of a second fraction (10) from the at least a portion of the powder component (3) in the aqueous solution (6) for obtaining a cleaned powder component;
wherein the wt%, by dry weight, of binder agent in the first fraction (9) is higher than the wt%, by dry weight, of binder agent in the second fraction (10).

2. The method according to claim 1, wherein said at least a portion of the powder component (3) is obtained by a size separation step in which mineral fibre fragments having a fibre length of 150 µm or less are separated from the powder component (3), and optionally wherein at least a portion of the remainder of the powder component (3) is recirculated for fragmenting together with a new batch of elements comprising mineral fibre material bonded by a binder agent.

3. The method according to claim 2, wherein said size separation step comprises sieving the powder component (3).

4. The method according to any one of the preceding claims, further comprising electrostatic separation of binder agent from the powder component (3).

5. The method according to any one of claims 1-4, wherein fragmenting the elements (1) is performed for provision of a powder component (3) comprising mineral fibre fragments having an average fibre length in the range of 20 - 500 µm.

6. The method according to any one of claim 1-5, wherein fragmenting the elements (1) is performed for provision of a powder component (3) comprising mineral fibre fragments having an average fibre width in the range of 5 - 25 µm, preferably 5 - 10 µm.

7. The method according to any one of the preceding claims, further comprising sonication of the at least a portion of the powder component (3) in the aqueous solution (6).

8. The method according to any one of the preceding claims, further comprising heating of the at least a portion of the powder component (3) in the aqueous solution (6).

9. The method according to any one of the preceding claims, wherein extraction of the first fraction (9) is performed by flotation.

10. The method according to any one of the preceding claims, wherein extraction of at least the second fraction (10) is carried out in a filtration process or a gravitational assisted separation process.

11. The method according to claim 10, wherein the gravitational assisted separation process comprises conducting a laminar flow of the aqueous solution (6) and said at least a portion of the powder component (3) dispersed therein in a channel (11) towards a channel outlet section (12) provided with a top outlet (12A) and a bottom outlet (12B), wherein a first flow of the aqueous solution and said at least a portion of the powder component (3) dispersed therein exits the channel (11) via the top outlet (12A) and a second flow of the aqueous solution and said at least a portion of the powder component (3) dispersed therein exits the channel via the bottom outlet (12B), and wherein the first fraction (9) is extracted from the first flow and the second fraction (10) is extracted from the second flow for obtaining said cleaned powder component.

12. The method according to any one of the preceding claims, wherein the dry weight of the second fraction (10) is predominantly constituted by mineral fibre fragments having a fibre length corresponding to a threshold value or less.

13. The method according to claim 12, wherein the threshold value is 100 µm, more preferably 80 µm and most preferably 60 µm.

14. The method according to claim 12 or 13, further comprising extraction of a third fraction (11), the dry weight of the third fraction being predominantly constituted by mineral fibre fragments having a fibre length above said threshold value, said third fraction (11) being recirculated for fragmenting together with a new batch of recycled elements (1) comprising mineral fibre material bonded by a binder agent.

15. The method according to any one of the preceding claims, wherein the aqueous solution (6) comprises solvent for separation of binder agent from mineral fibre material.
